# DEMANDE DE BREVET EUROPEEN

(11) **EP 4 497 628 A1**
(43) Date de publication de la demande: **29.01.2025**
(21) Numéro de dépôt: 24189850.1
(22) Date de dépôt: 19.07.2024
(51) Int. Cl.: B60N 2/22, B60N 2/30, B60N 2/75

(54) **ELEMENT DE DOSSIER DE BANQUETTE ARRIERE DE VEHICULE**

(30) Priorité: 27.07.2023 FR 2308131
(71) Demandeur: FAURECIA Sièges d'Automobile, 92000 Nanterre (FR)
(72) Inventeur: YOUNES, Mustapha, 92390 VILLENEUVE LA GARENNE (FR); DEMPTOS, Philippe, 45330 MALESHERBES (FR); FAURE, Roland, 91150 ETAMPES (FR)
(74) Mandataire: Plasseraud IP

(57) **Abrégé**

Dossier de banquette (1) arrière de véhicule comprenant :
- une partie de dossier (2) servant également d'accoudoir, apte à pivoter autour d'un axe de pivotement (P) entre une position relevée pour former dossier et une position abaissée pour former accoudoir,
- un cadre de dossier (6) destiné à être recouvert par ladite partie de dossier (2) en position relevée,
- un premier élément de verrouillage (8) fixé sur l'un du cadre de dossier (6) et de la partie de dossier (2) et comportant une tige (9) et une extrémité en forme d'ogive (10),
- une deuxième élément de verrouillage (11) fixée sur l'autre du cadre de dossier (6) et de la partie de dossier (2) et comportant un anneau de verrouillage (12),
- l'extrémité en forme d'ogive (10) du premier élément de verrouillage (8) étant configurée pour coopérer avec l'anneau de verrouillage (12) de la deuxième élément de verrouillage (11) de manière à permettre de verrouiller la partie de dossier (2) en position relevée au cadre de dossier (6).

## Description

### Domaine technique

La présente divulgation relève du domaine des véhicules notamment automobiles, notamment des banquettes de véhicules automobiles. Elle concerne en particulier un élément de dossier de banquette, notamment arrière, de véhicule comprenant une partie de dossier servant également d'accoudoir, apte à pivoter autour d'un axe de pivotement entre une position relevée pour former dossier et une position abaissée pour former accoudoir.

### Technique antérieure

Divers documents de brevet décrivent des dossiers de banquette arrière de véhicule pouvant pivoter entre une position relevée de dossier et une position abaissée d'accoudoir.

Parmi ceux-ci, EP0713800 décrit un siège arrière comportant un coussin, un dossier et un accoudoir articulé autour d'un axe horizontal transversal à une structure porteuse en partie inférieure du dossier et mobile entre une position relevée dans laquelle l'accoudoir définit une partie de dossier et une position abaissée dans laquelle l'accoudoir dégage un passage à travers le dossier. Ce passage peut être utilisé pour recevoir des articles allongés tels que des skis ou similaires disposés dans le coffre à bagages du véhicule automobile. Le dossier comporte un cadre métallique ainsi qu'un cadre auxiliaire monté pivotant et comportant lui-même un mécanisme de verrouillage apte à coopérer avec un pêne porté par le dossier pour verrouiller le cadre auxiliaire dans sa position relevée.

Il existe un besoin pour améliorer le verrouillage en position relevée de l'accoudoir définissant une partie de dossier. En particulier, il existe un besoin pour bénéficier d'un élément de dossier de banquette de véhicule automobile pouvant pivoter entre une position relevée et une position abaissée qui puisse être verrouillé dans la position relevée de manière à empêcher, en cas de choc, un déverrouillage.

### Résumé

La présente divulgation vient améliorer la situation.

Il est proposé un élément de dossier de banquette, notamment arrière, de véhicule comprenant :
- une partie de dossier servant également d'accoudoir, apte à pivoter autour d'un axe de pivotement entre une position relevée pour former dossier et une position abaissée pour former accoudoir,
- un cadre de dossier destiné à être recouvert par ladite partie de dossier en position relevée,
- un premier élément de verrouillage fixé sur l'un du cadre de dossier et de la partie de dossier et comportant une extrémité en forme d'ogive,
- un deuxième élément de verrouillage, complémentaire du premier élément de verrouillage, fixé sur l'autre du cadre de dossier et de la partie de dossier,
- l'extrémité en forme d'ogive du premier élément de verrouillage étant configurée pour coopérer avec le deuxième élément de verrouillage de manière à permettre de verrouiller la partie de dossier en position relevée au cadre de dossier.

La coopération du deuxième élément de verrouillage et l'extrémité en forme d'ogive permet d'assurer un verrouillage satisfaisant, permettant notamment de résister au test de choc valise consistant en un choc frontal avec présence de bagages dans le coffre, derrière la banquette, notamment arrière.

Par « extrémité en forme d'ogive », on entend que la partie extrémale du premier élément de verrouillage présente une forme conique ogivale, c'est-à-dire bombée ou incurvée, symétrique ou non autour d'un axe longitudinal, dont la pointe constitue un nez. Le premier élément de verrouillage constitue notamment une partie mâle et le deuxième élément de verrouillage constitue notamment une partie femelle, complémentaire.

Les caractéristiques exposées dans les paragraphes suivants peuvent, optionnellement, être mises en oeuvre, indépendamment les unes des autres ou en combinaison les unes avec les autres :

De préférence, le premier élément de verrouillage est fixé sur le cadre de dossier et le deuxième élément de verrouillage est fixé sur la partie de dossier. En variante, le premier élément de verrouillage est fixé sur la partie de dossier tandis que le deuxième élément de verrouillage est fixé sur le cadre de dossier.

Le premier élément de verrouillage peut comporter une gorge transversale, notamment circulaire, à proximité de l'extrémité en forme d'ogive, et le deuxième élément de verrouillage peut comporter un anneau de verrouillage, la gorge étant configurée pour recevoir l'anneau de verrouillage en position relevée verrouillée de la partie de dossier.

Une telle gorge permet de maintenir l'anneau de verrouillage selon un axe longitudinal, formant butée de part et d'autre de l'anneau en position de verrouillage. La largeur de la gorge est bien entendu adaptée à recevoir l'anneau de verrouillage dans sa largeur. La gorge borde avantageusement l'extrémité en forme d'ogive, séparant cette dernière du reste du premier élément de verrouillage.

Le premier élément de verrouillage peut comporter une tige, comprenant ladite gorge et ladite extrémité en forme d'ogive et s'étendant selon un axe longitudinal. Dans ce cas, la tige est positionnée de préférence de manière à s'étendre sensiblement perpendiculairement à un plan dans lequel peut s'étendre l'anneau de verrouillage.

L'anneau de verrouillage est par exemple monté mobile, de préférence en translation, notamment dans le plan dans lequel il s'étend, et le deuxième élément de verrouillage peut comporter un ressort de rappel de telle sorte que, lors du verrouillage en position relevée de la partie de dossier au cadre du dossier, l'extrémité en forme d'ogive du premier élément de verrouillage entre en contact avec l'anneau de verrouillage, que l'anneau de verrouillage se déplace, notamment vers le bas, poussé par la forme de l'extrémité en forme d'ogive au fur et à mesure de son avancement dans l'anneau de verrouillage, que l'anneau de verrouillage pénètre dans la gorge, étant poussé par le ressort de rappel en tension contre un fond de la gorge.

Le deuxième élément de verrouillage peut comporter une languette permettant de déplacer l'anneau de verrouillage de manière à pouvoir le dégager de la gorge et désolidariser le premier élément de verrouillage et le deuxième élément de verrouillage. Cela permet de déverrouiller la partie de dossier pour, par exemple, la faire pivoter en version accoudoir.

L'anneau de verrouillage et le premier élément de verrouillage peuvent être configurés de telle sorte qu'en position relevée de la partie de dossier, après verrouillage au cadre de dossier, il ne subsiste pas de jeu radial entre l'anneau de verrouillage et le fond de la gorge. Cela peut être dû à la géométrie de l'anneau de verrouillage et de la gorge ainsi qu'à la présence du ressort du rappel.

Une telle absence de jeu radial permet d'assurer un verrouillage sécurisé entre l'anneau de verrouillage et le premier élément de verrouillage.

Dans un exemple, l'extrémité en forme d'ogive est non symétrique autour d'un axe central longitudinal et présente un nez décalé, notamment situé au-dessus, par rapport à l'axe central longitudinal du premier élément de verrouillage, notamment de la tige.

Une telle forme non symétrique de l'extrémité en forme d'ogive permet notamment d'améliorer la cinématique de verrouillage.

En variante, l'extrémité en forme d'ogive est symétrique et présente un nez situé sur l'axe central longitudinal du premier élément de verrouillage, notamment de la tige.

Lorsque le premier élément de verrouillage comporte une tige, cette dernière peut être soudée sur le cadre du dossier, étant notamment sensiblement perpendiculaire à un plan du cadre du dossier.

Le premier élément de verrouillage, notamment la tige du premier élément de verrouillage peut comporter au moins un détrompeur pour le montage au cadre du dossier, de manière à positionner l'extrémité en forme d'ogive dans la bonne position, notamment dans le cas où elle n'est pas symétrique.

L'élément de dossier de banquette peut comporter un support sur lequel est fixée, notamment soudée, la tige du premier élément de verrouillage. Dans ce cas, le support peut comporter une première plaque en forme de U avec des branches s'étendant sensiblement parallèlement à la tige en éloignement de celle-ci et une deuxième plaque fixée, notamment soudée, sur le cadre de dossier, la deuxième plaque comportant deux fentes dans lesquelles sont respectivement insérées les deux branches du U de la première plaque, la première plaque étant fixée, notamment soudée, à la deuxième plaque au niveau desdites fentes.

L'anneau de verrouillage peut s'étendre sensiblement dans un plan de la partie de dossier. L'anneau de verrouillage peut être mobile en translation dans ce plan, de préférence vers le bas.

L'anneau de verrouillage peut notamment être déplacé vers le bas lorsque l'extrémité en forme d'ogive entre en contact au niveau de son nez puis se déplace de manière à forcer le déplacement de l'anneau de verrouillage étant donné sa forme ogivale, ce déplacement allant à l'encontre du ressort de rappel. Lorsque l'anneau de verrouillage arrive au niveau de la gorge, le ressort de rappel force le déplacement de l'anneau de verrouillage vers le haut, de manière à le placer contre le fond de la gorge, dans une portion inférieure de celle-ci.

En variante, l'anneau de verrouillage peut être déplacé vers le haut lorsque l'extrémité en forme d'ogive entre en contact au niveau de son nez puis se déplace de manière à forcer le déplacement de l'anneau de verrouillage étant donné sa forme ogivale, ce déplacement allant à l'encontre du ressort de rappel. Lorsque l'anneau de verrouillage arrive au niveau de la gorge, le ressort de rappel force le déplacement de l'anneau de verrouillage vers le bas, de manière à le placer contre le fond de la gorge, dans une portion supérieure de celle-ci.

L'anneau de verrouillage présente par exemple une forme arrondie configurée pour épouser une forme du fond de la gorge au moins sur une portion inférieure, ou supérieure, de la gorge.

L'anneau de verrouillage est avantageusement un anneau ouvert, notamment présentant une forme de V. La forme arrondie de l'anneau de verrouillage peut constituer la pointe du V. La forme et les dimensions de l'anneau de verrouillage, de même que celles de la gorge, sont avantageusement choisies de manière à permettre une complémentarité de formes entre la portion inférieure, ou supérieure, de la gorge et la partie de l'anneau de verrouillage en contact avec cette portion inférieure, ou supérieure, de la gorge. De plus, la forme et les dimensions de l'anneau de verrouillage, de même que celles du premier élément de verrouillage, notamment de l'extrémité en forme d'ogive et de la gorge, sont de préférence choisies pour permettre d'avoir une tension du ressort de rappel suffisante pour contraindre l'anneau de verrouillage contre le fond de la gorge afin de sécuriser le verrouillage.

L'épaisseur de l'anneau de verrouillage 12 est inférieure à la largeur de la gorge afin d'assurer le verrouillage.

La profondeur de la gorge depuis son extrémité extérieure jusqu'à son fond peut être choisie de telle sorte que, lorsque l'anneau de verrouillage est dans la position verrouillée avec le premier élément de verrouillage, un choc ne puisse pas éjecter l'anneau de verrouillage hors de la gorge.

Selon un autre aspect, en combinaison avec ce qui précède, il est proposé une banquette, notamment arrière, comportant un élément de dossier de banquette tel que défini plus haut.

Selon un autre aspect, en combinaison avec ce qui précède, il est proposé un véhicule automobile comportant une banquette, notamment arrière, telle que définie plus haut.

### Brève description des dessins

D'autres caractéristiques, détails et avantages apparaîtront à la lecture de la description détaillée ci-après, et à l'analyse des dessins annexés, sur lesquels :
[Fig. 1] montre schématiquement, en perspective et vu de côté, un élément de dossier de banquette selon un exemple.
[Fig. 2] montre schématiquement, en coupe selon un plan longitudinal, l'élément de dossier de banquette de la figure 1, avant verrouillage en position relevée.
[Fig. 3] montre schématiquement et en perspective, un cadre de banquette selon un exemple.
[Fig. 4] montre un détail IV de la figure 3.
[Fig. 5] montre partiellement, schématiquement et en perspective le dossier de banquette selon un exemple.
[Fig. 6] montre une vue en coupe selon un plan longitudinal, schématique et partielle, du dossier de banquette au début du verrouillage.
[Fig. 7] montre une vue similaire à la figure 6 en cours de verrouillage.
[Fig. 8] montre une vue similaire à la figure 6 après verrouillage.
[Fig. 9] montre une vue partielle, schématique, de face, partiellement en coupe de l'élément de dossier de banquette selon un exemple, après verrouillage.
[Fig. 10] montre, schématiquement, partiellement et en perspective, vue de face, l'élément de dossier de banquette arrière selon un exemple, après verrouillage.
[Fig. 11] est une vue similaire à la figure 10 illustrant la zone de recouvrement assurant le verrouillage.
[Fig. 12] représente isolément, de profil et schématiquement, le premier élément de verrouillage d'un exemple d'élément de dossier de banquette.
[Fig. 13] montre schématiquement en vue de côté, un autre exemple de premier élément de verrouillage d'un élément de dossier de banquette.
[Fig. 14] est une vue schématique en perspective d'un exemple de dossier de banquette.
[Fig. 15] montre schématiquement, en vue de côté, un exemple de véhicule comportant une banquette arrière.

### Description des modes de réalisation

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un dossier de banquette de véhicule dans sa position normale d'utilisation.

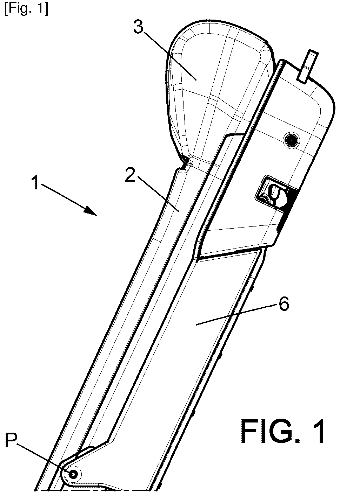

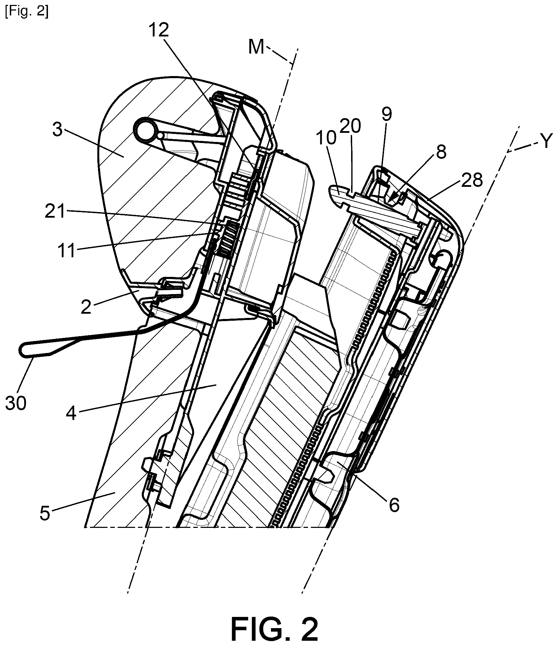

Il est maintenant fait référence à la figure 1. Celle-ci illustre un élément de dossier de banquette 1, dans cet exemple arrière, de véhicule selon un exemple. L'élément de dossier de banquette 1 comporte une partie de dossier 2, dans cet exemple une partie centrale de dossier, servant également d'accoudoir, apte à pivoter autour d'un axe de pivotement P, horizontal, entre une position relevée pour former dossier illustrée sur la figure 1 et une position abaissée pour former accoudoir. La partie de dossier 2 comporte une partie formant appui-tête 3 dans cet exemple. Comme davantage visible sur la figure 2, la partie 2 comporte à la fois une structure 4, notamment métallique et une garniture 5. La partie de dossier 2 peut occuper environ 20% de la longueur de la banquette et se situer au milieu de celle-ci, entre deux parties latérales de dossier occupant chacune environ 40% de la longueur de la banquette.

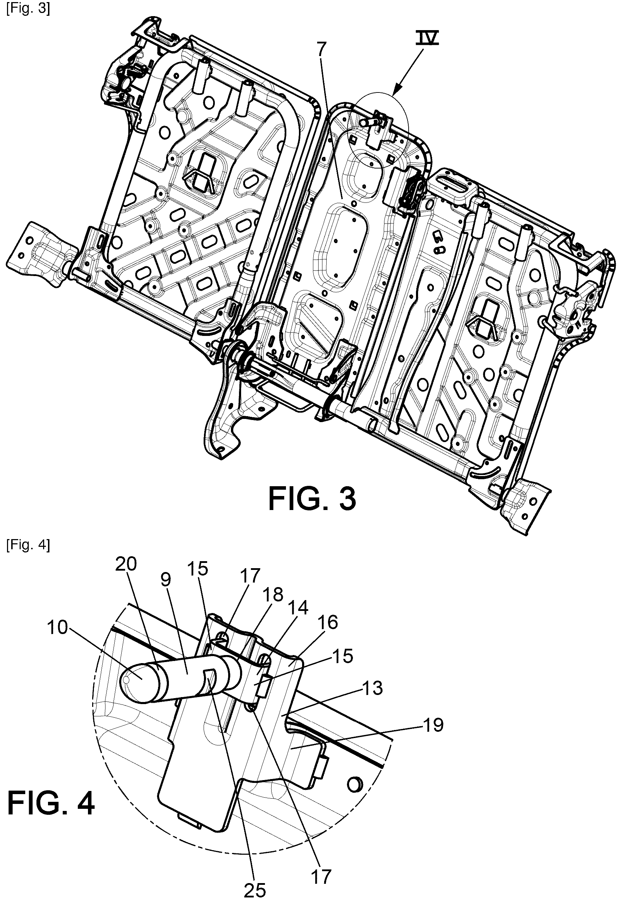

L'élément de dossier de banquette 1 comporte un cadre de dossier 6, dans cet exemple un cadre central de dossier, destiné à être recouvert par la partie de dossier 2 en position relevée, comme visible sur la figure 1. Ce cadre de dossier 6 comporte notamment une structure 7, par exemple métallique, illustrée sur la figure 3, et un habillage 28.

Pour le verrouillage en position relevée de la partie de dossier 2 avec le cadre de dossier 6, l'élément de dossier de banquette 1 comporte un premier élément de verrouillage 8 fixé sur l'un du cadre de dossier 6 et de la partie de dossier 2, en l'espèce sur le cadre de dossier 6. Le premier élément de verrouillage 8 comporte une extrémité en forme d'ogive 10.

Toujours pour le verrouillage, l'élément de dossier de banquette 1 comporte un deuxième élément de verrouillage 11 fixé sur l'autre du cadre de dossier 6 et de la partie de dossier 2, donc en l'espèce sur la partie de dossier 2.

L'extrémité en forme d'ogive 10 du premier élément de verrouillage 8 est configurée pour coopérer avec le deuxième élément de verrouillage 11 de manière à permettre de verrouiller la partie de dossier 2 en position relevée au cadre de dossier 6.

L'extrémité en forme d'ogive 8 présente une forme conique bombée, pouvant être encore indiquée comme incurvée ou ogivale, avec la pointe du cône formant le nez de l'extrémité en forme d'ogive 8.

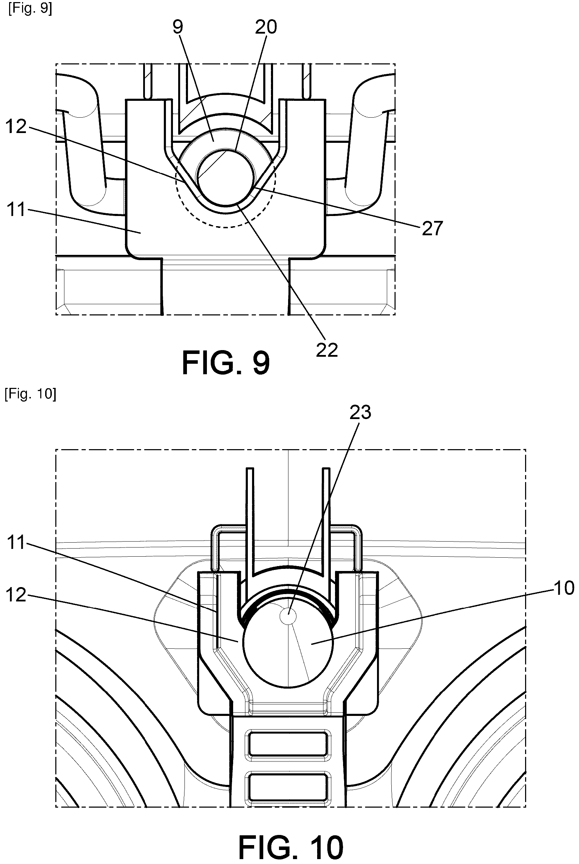

Dans cet exemple, le deuxième élément de verrouillage 11 comporte un anneau de verrouillage 12, davantage visible sur la figure 9.

Dans l'exemple illustré sur les figures 1 à 9, le premier élément de verrouillage 8 est fixé, comme visible sur les figures 3 et 4 notamment, sur le cadre de dossier 6. Le premier élément de verrouillage 8 comporte une tige 9 comprenant l'extrémité en forme d'ogive 10, dans cet exemple. L'élément de dossier de banquette 1 comporte un support 13 sur lequel est fixée, notamment soudée, la tige 9 du premier élément de verrouillage 8. Comme visible sur la figure 4, le support 13 comporte une première plaque 14 en forme de U avec des branches 15 s'étendant sensiblement parallèlement à la tige 9 en éloignement de celle-ci. Le support 13 comporte encore une deuxième plaque 16 fixée, notamment soudée, sur le cadre de dossier 6, notamment sur la structure 7 de celui-ci. Comme visible, dans cet exemple, la deuxième plaque 16 comporte deux fentes 17, parallèles entre elles, dans lesquelles sont respectivement insérées les deux branches 15 du U de la première plaque 14, la première plaque 14 étant fixée, notamment soudée, à la deuxième plaque 16 au niveau des fentes 17.

La tige 9 est fixée par soudure à la première plaque 14 à une extrémité 18 de la tige 9 qui est opposée à l'extrémité en forme d'ogive 10. Le support 13 comporte deux pattes de fixation 19 dont une est visible sur la figure 4 formant un décrochement et une partie parallèle à la deuxième plaque 16 et en contact avec la structure 7, étant soudée à celle-ci.

La tige 9 est fixée sur le cadre de dossier 6 de manière à s'étendre sensiblement perpendiculairement à un plan Y du cadre de dossier 6.

Le premier élément de verrouillage 8, dans cet exemple la tige 9, comporte une gorge 20 transversale, dans cet exemple circulaire, configurée pour recevoir l'anneau de verrouillage 12 en position relevée verrouillée de la partie de dossier 2. La gorge 20 s'étend jusqu'à un fond 22 de la gorge 20 définissant le diamètre de la tige 9 au niveau de la gorge 20 qui est bien entendu inférieur au diamètre de la tige 9 en dehors de la gorge 20. La gorge 20 borde l'extrémité en forme d'ogive 10. Le premier élément de verrouillage 8 peut être entièrement réalisé en métal.

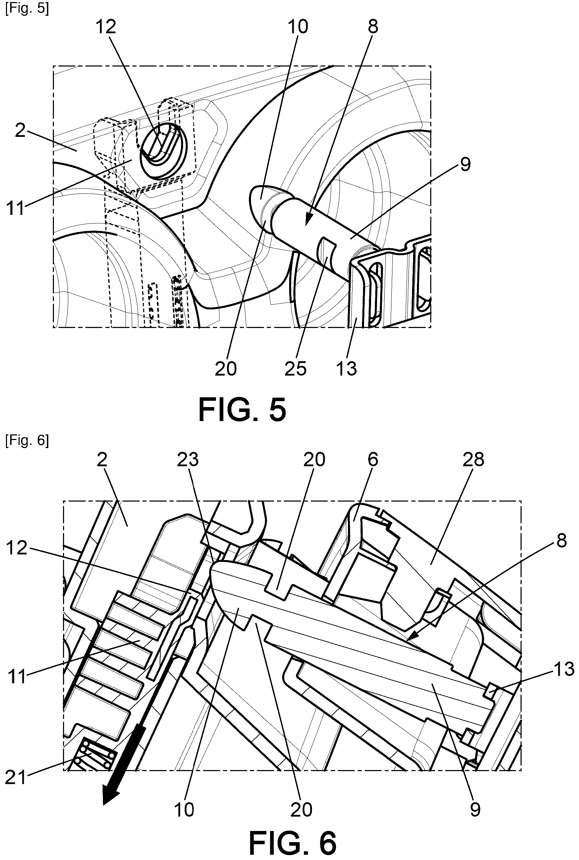

Comme visible sur les figures 5 et 9, l'anneau de verrouillage 12 présente une forme arrondie configurée pour épouser une forme du fond 22 de la gorge 20 au moins sur une portion inférieure 27 de la gorge 20. L'anneau de verrouillage 12 est dans cet exemple un anneau ouvert. L'anneau de verrouillage 12 présente une forme de V. La forme arrondie de l'anneau de verrouillage 12 constitue la pointe du V.

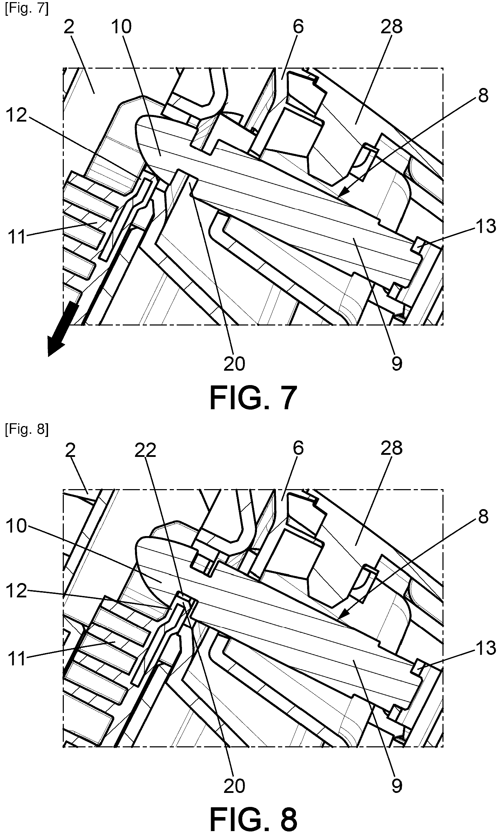

L'anneau de verrouillage 12 est monté mobile en translation sur la partie de dossier 2, dans un plan de celle-ci. Le deuxième élément de verrouillage 11 comporte un ressort de rappel 21. Ainsi, comme illustré successivement sur les figures 6, 7 et 8, après la phase d'approche illustrée sur la figure 5, lors des étapes de verrouillage en position relevée de la partie de dossier 2 au cadre du dossier 6, l'extrémité en forme d'ogive 10 du premier élément de verrouillage 8 entre en contact avec l'anneau de verrouillage 12, comme illustré sur la figure 6, au niveau du nez 23 ou à proximité inférieure de celui-ci. Puis, l'anneau de verrouillage 12 se déplace, dans cet exemple vers le bas, comme représenté par la flèche sur les figures 6 et 7, poussé par la courbure extérieure de l'extrémité en forme d'ogive 10 au fur et à mesure de son avancement dans l'anneau de verrouillage 12. Enfin, comme illustré sur la figure 8, l'anneau de verrouillage 12 pénètre dans la gorge 20, étant poussé par le ressort de rappel 21 en tension contre le fond 22 de la gorge 20, dans un sens opposé, c'est-à-dire vers le haut dans cet exemple, comme l'indique la flèche sur cette figure. Les expressions « vers le bas » et « vers le haut » ne signifient pas nécessairement dans une direction verticale. En l'espèce, les déplacements de l'anneau de verrouillage 12 se font dans un plan M de la partie de dossier 2. L'anneau de verrouillage 12 s'étend d'ailleurs sensiblement parallèlement à un plan M de la partie de dossier 2, lequel est parallèle au plan Y en position relevée verrouillée de la partie de dossier 2. L'anneau de verrouillage 12 et une grande partie du deuxième élément de verrouillage 11 peuvent être réalisés en matériau polymère.

Le deuxième élément de verrouillage 11 comporte dans l'exemple de la figure 2, une languette 30 permettant de déplacer l'anneau de verrouillage 12 de manière à pouvoir le dégager de la gorge 20 et désolidariser le premier élément de verrouillage 8 et le deuxième élément de verrouillage 11. Cela permet de déverrouiller la partie de dossier 2 pour, par exemple, la faire pivoter en version accoudoir.

L'anneau de verrouillage 12 et le premier élément de verrouillage 8 sont configurés de telle sorte qu'en position relevée de la partie de dossier 2, après verrouillage au cadre de dossier 6, c'est-à-dire dans la position illustrée sur les figures 8, mais également 9 à 11, il ne subsiste pas de jeu radial entre l'anneau de verrouillage 12 et le fond 22 de la gorge 20, notamment du fait de la présence d'un ressort de rappel, de la géométrie anneau de verrouillage 12 et de la gorge 20, de la position de la butée 24.

La partie, supérieure dans cet exemple, de l'extrémité en forme d'ogive 10 présente des dimensions adaptées et une forme configurée pour pouvoir pénétrer correctement dans la partie de dossier 2 pour le verrouillage sans gêner le passage.

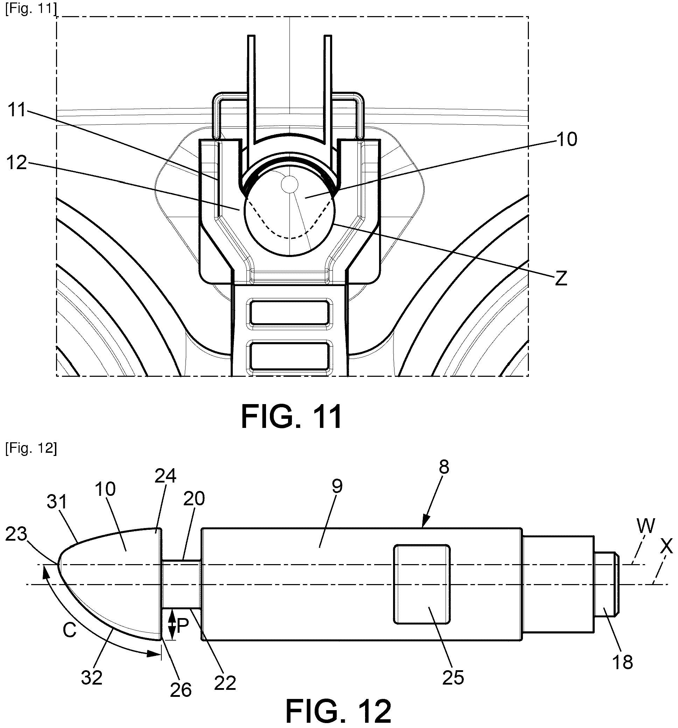

Dans l'exemple illustré, l'extrémité en forme d'ogive 10 est non symétrique autour de l'axe central longitudinal X du premier élément de verrouillage 8, dans cet exemple de la tige 9. L'extrémité en forme d'ogive 10 présente un nez 23 décalé, notamment situé au-dessus, par rapport à l'axe X. On peut voir cette géométrie particulière sur les figures 6 à 11, notamment, mais également sur la figure 12. Sur cette figure 12, on visualise que le nez 23, c'est-à-dire le point le plus extrémal de l'extrémité en forme d'ogive 10 et donc du premier élément de verrouillage 8, se trouve au-dessus de l'axe X, et également au-dessus, dans cet exemple, du fond 22 de la gorge 20, sur un axe W parallèle à l'axe X, à distance de celui-ci. Le nez 23 se trouve également au-dessus, dans cet exemple, de la pointe du V de l'anneau de verrouillage 12 lorsque non contraint. Cette forme est particulièrement avantageuse. En effet, la course C sur laquelle l'extrémité en forme d'ogive 10 est en contact avec l'anneau de verrouillage 12 lors de l'avancement de la tige 9 vers la partie de dossier 2 est plus longue que si l'extrémité en forme d'ogive 10 est symétrique autour de l'axe X, avec un nez 23 sur l'axe X. Cela autorise une position plus haute de l'anneau de verrouillage 12 lorsque non contraint par rapport à la position du fond de gorge 22, et ce même en tenant compte des tolérances de position et de géométrie des premier et deuxième éléments de verrouillage. Ainsi, on peut obtenir une absence de jeu radial, comme visible sur la figure 9, notamment, entre l'anneau de verrouillage 12 et le fond 22 de la gorge 20, en partie inférieure 27 de celle-ci. De plus, la zone de recouvrement Z illustrée sur la figure 11, en position verrouillée, entre l'anneau de verrouillage 11 et la butée 24, formée par la gorge 20 au début de l'extrémité en forme d'ogive 10, est suffisamment étendue pour permettre un verrouillage efficace, notamment en cas de choc, ce qui permet d'améliorer la sécurité.

La partie supérieure 31 de l'extrémité en forme d'ogive 10, située au-dessus du nez 23, peut être moins incurvée, moins bombée que la partie inférieure 32 située au-dessous du nez 23, dans le plan de la figure 12, comme visible sur cette figure. La partie supérieure 31 de l'extrémité en forme d'ogive 10 peut présenter une forme sensiblement elliptique.

La profondeur P de la gorge 20 depuis son extrémité extérieure 26 jusqu'à son fond 22 est choisie de telle sorte que lorsque l'anneau de verrouillage 12 est dans la position verrouillée avec le premier élément de verrouillage 8, un choc ne puisse pas éjecter l'anneau de verrouillage 12 hors de la gorge 20. Le diamètre de la tige 9 au niveau du fond de la gorge peut être égal à 6 mm environ. La profondeur P peut être comprise entre 2 mm et 10 mm, de préférence entre 3 mm et 5 mm, de préférence encore égale à 4 mm environ.

On visualise sur les figures 12, mais également 4 et 5, que le premier élément de verrouillage 8, dans cet exemple la tige 9 du premier élément de verrouillage 8 comporte au moins un détrompeur 25 pour son montage au cadre du dossier 6, de manière à positionner l'extrémité en forme d'ogive 10 dans la bonne position, du fait de sa non-symétrie.

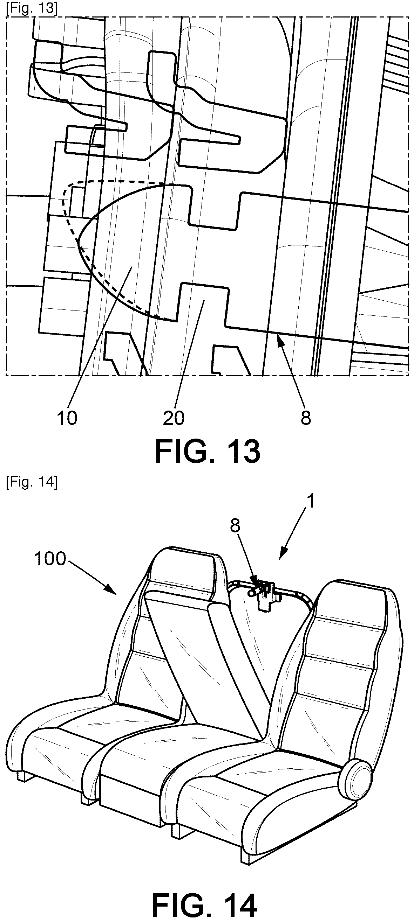

Il est à noter qu'on ne sort pas du cadre de la présente divulgation si l'extrémité en forme d'ogive 10 est symétrique, avec son nez 23 disposé sur l'axe X. On a illustré sur la figure 13 un tel exemple. En pointillés est représentée l'extrémité en forme d'ogive 10 de l'exemple de la figure 12 pour comparaison.

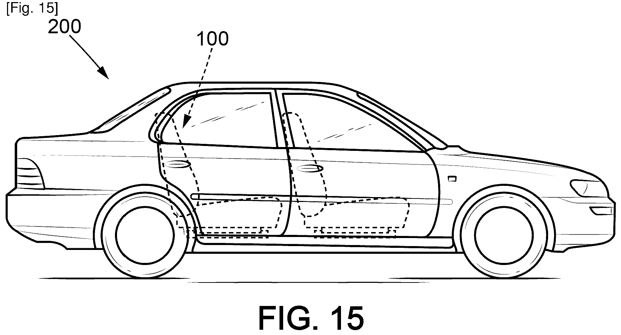

La figure 14 représente un exemple d'élément de dossier de banquette 1, intégré dans un dossier de banquette d'une banquette 100, notamment arrière, selon un exemple. La figure 15 illustre un exemple de véhicule 200 intégrant une telle banquette 100 qui est située, dans cet exemple à l'arrière.

La présente divulgation n'est bien entendu pas limitée aux exemples qui viennent d'être décrits. En particulier, l'anneau de verrouillage 12 peut être destiné à être en contact avec une portion supérieure de la gorge. Dans ce cas, le nez peut être situé sur un axe parallèle à l'axe X situé à distance de celui-ci au-dessous de celui-ci, si l'extrémité en forme d'ogive est dissymétrique. L'anneau de verrouillage 12 se déplacera alors vers le haut lorsqu'en contact avec l'extrémité en forme d'ogive au fur et à mesure de l'avancement de celle-ci, et sera ensuite contraint vers le bas par le ressort de rappel.

La banquette peut être une banquette avant.

## Revendications

1. Elément de dossier de banquette (1) de véhicule comprenant :
- une partie de dossier (2) servant également d'accoudoir, apte à pivoter autour d'un axe de pivotement (P) entre une position relevée pour former dossier et une position abaissée pour former accoudoir,
- un cadre de dossier (6) destiné à être recouvert par ladite partie de dossier (2) en position relevée,
- un premier élément de verrouillage(8) fixé sur l'un du cadre de dossier (6) et de la partie de dossier (2) et comportant une extrémité en forme d'ogive (10),
- un deuxième élément de verrouillage (11), complémentaire du premier élément de verrouillage (8), fixé sur l'autre du cadre de dossier (6) et de la partie de dossier (2),
- l' extrémité en forme d'ogive (10) du premier élément de verrouillage (8)étant configurée pour coopérer avec le deuxième élément de verrouillage (11) de manière à permettre de verrouiller la partie de dossier (2) en position relevée au cadre de dossier (6).

2. Elément de dossier de banquette (1) selon la revendication 1, dans lequel le premier élément de verrouillage (8) est fixé sur le cadre de dossier (6) et le deuxième élément de verrouillage (11) est fixé sur la partie de dossier (2).

3. Elément de dossier de banquette (1) selon l'une des revendications 1 et 2, dans lequel le premier élément de verrouillage comporte une gorge (20) transversale, notamment circulaire, à proximité de l'extrémité en forme d'ogive (10), et le deuxième élément de verrouillage (11) comporte un anneau de verrouillage (12) , la gorge (20) étant configurée pour recevoir l'anneau de verrouillage (12) en position relevée verrouillée de la partie de dossier (2).

4. Elément de dossier de banquette (1) selon la revendication précédente, dans lequel l'anneau de verrouillage (12) est monté mobile et le deuxième élément de verrouillage (11) comporte un ressort de rappel (21) de telle sorte que, lors du verrouillage en position relevée de la partie de dossier (2) au cadre du dossier (6), l'extrémité en forme d'ogive (10) du premier élément de verrouillage (8) entre en contact avec l'anneau de verrouillage (12), que l'anneau de verrouillage (12) se déplace, notamment vers le bas, poussé par la forme de l'extrémité en forme d'ogive (10) au fur et à mesure de son avancement dans l'anneau de verrouillage (12), que l'anneau de verrouillage (12) pénètre dans la gorge (20), étant poussé par le ressort de rappel (21) en tension contre un fond (22) de la gorge (20).

5. Elément de dossier de banquette (1) selon l'une des deux revendications immédiatement précédentes, dans lequel l'anneau de verrouillage (12) et le premier élément de verrouillage (8) sont configurés de telle sorte qu'en position relevée de la partie de dossier (2), après verrouillage au cadre de dossier (6), il ne subsiste pas de jeu radial entre l'anneau de verrouillage (12) et le fond (22) de la gorge (20).

6. Elément de dossier de banquette (1) selon l'une quelconque des revendications précédentes, dans lequel l'extrémité en forme d'ogive (10) est non symétrique autour d'un axe central longitudinal (X) du premier élément de verrouillage (8) et présente un nez (23) décalé, notamment situé au-dessus, par rapport à l'axe central longitudinal (X)du premier élément de verrouillage (8).

7. Elément de dossier de banquette (1) selon l'une quelconque des revendications précédentes, dans lequel le premier élément de verrouillage (8) comporte une tige (9), l'élément de dossier de banquette (1) comportant un support (13) sur lequel est fixée, notamment soudée, la tige (9) du premier élément de verrouillage (8), le support (13) comportant une première plaque (14) en forme de U avec des branches (15) s'étendant sensiblement parallèlement à la tige (9) en éloignement de celle-ci et une deuxième plaque (16) fixée, notamment soudée, sur le cadre de dossier (6), la deuxième plaque (16) comportant deux fentes (17) dans lesquelles sont respectivement insérées les deux branches (15) du U de la première plaque (14), la première plaque (14) étant fixée, notamment soudée, à la deuxième plaque (16) au niveau desdites fentes (17).

8. Elément de dossier de banquette (1) selon la revendication 3 et éventuellement l'une quelconque des revendications précédentes, dans lequel l'anneau de verrouillage (12) présente une forme arrondie configurée pour épouser une forme du fond (22) de la gorge (20) au moins sur une portion inférieure (27) de la gorge (20).

9. Elément de dossier de banquette (1) selon la revendication précédente, dans lequel l'anneau de verrouillage (12) est un anneau ouvert présentant une forme de V et dans lequel la forme arrondie de l'anneau de verrouillage (12) constitue la pointe du V.

10. Banquette (100), notamment arrière, comportant un élément de dossier de banquette (1) selon l'une quelconque des revendications précédentes.
